**Europäisches Patentamt**

(19) **European Patent Office**

**Office européen des brevets**

(11) Veröffentlichungsnummer: **0 045 019**
**B1**

(12) **EUROPÄISCHE PATENTSCHRIFT**

(45) Veröffentlichungstag der Patentschrift:
**02.11.83**

(51) Int. Cl.³: **E 06 C 7/08,** F 16 B 7/04

(21) Anmeldenummer: **81105619.1**

(22) Anmeldetag: **17.07.81**

(54) **Zerlegbare Leiter, insbesondere Schachtleiter.**

(30) Priorität: **25.07.80 DE 3028209**

(43) Veröffentlichungstag der Anmeldung:
**03.02.82 Patentblatt 82/5**

(45) Bekanntmachung des Hinweises auf die Patenterteilung:
**02.11.83 Patentblatt 83/44**

(84) Benannte Vertragsstaaten:
**AT BE CH DE FR GB IT LI LU NL SE**

(56) Entgegenhaltungen:
**DE - A - 2 241 533**
**DE - A - 2 327 527**
**DE - B - 1 022 848**
**FR - A - 552 305**

(73) Patentinhaber: **Otto Schürch A.G. Armaturen für den Schachtbau, Kirchweg 49, CH-8102 Oberengstringen (CH)**

(72) Erfinder: **Gloor, Georg, Kirchweg 49, CH-8102 Oberengstringen (CH)**

(74) Vertreter: **Troesch, Hans Alfred, Dr. Ing. et al, Walchestrasse 19, CH-8035 Zürich (CH)**

## Zerlegbare Leiter, insbesondere Schachtleiter

Die vorliegende Erfindung betrifft eine zerlegbare Leiter, insbesondere eine Schachtleiter, mit mindestens einem hohlprofilförmigen Holm und herausnehmbaren Sprossen, wobei der Holm mit zu den Sprossenenden genau passenden Öffnungen in der den Sprossen zugekehrten Profilwand versehen ist, und die Sprossenenden je mindestens eine Ausnehmung aufweisen, in die eine in Längsrichtung des Holms eingeschobenes Sicherungsorgan eingreift.

Bekannte Leitern, welche aus Eisen, Aluminium oder Kunststoff hergestellt werden, sind vorwiegend geschweisst oder genietet, gegebenenfalls auch verschraubt.

Es ist auch das sog. MSU-Henrizen-Leitersystem bekannt geworden, welches in den beiden Holmen Kunststoffzapfen vorsieht, die beim Einführen der Sprossen in die Holme zusammengepresst werden, wodurch deren Halterung erzielt wird. Um aber die zur Erreichung dieser Halterungen nötigen Kräfte zu erzielen, muss das Zusammenpressen der Leiterteile mittels verhältnismässig grosser Maschinen erfolgen, weshalb ein Zusammenbau dieser Leitern auf der Baustelle nicht möglich ist.

In DE-U-78 02 596 ist ferner ein Gitter, eine Leiter o. dgl. beschrieben, bei welcher Vorrichtung Holme und dazwischenliegende Sprossen vorgesehen sind, wobei Sprossenenden und diese aufnehmenden Holme derart angeordnet und verspannt sind, dass die Sprossen in ihrer vorgesehenen Lage gehalten werden. Diese Konstruktion offenbart zweifellos die der vorliegenden Erfindung zugrundeliegende Aufgabe. Sie löst diese Aufgabe mit anderen Mitteln.

Demgegenüber weist die erfindungsgemässe zerlegbare Leiter ein einziges, in Längsrichtung des Holmes einschiebbares Sicherungsorgan auf, welches mit dem Haltestab, gemäss dem DE-U-78 02 596, in dem Sinn nicht vergleichbar ist, als zu den Sicherungsorganen dort zwangsläufig ein Gummistreifen gehört, ohne welchen bei der beschriebenen Ausführung die Sicherung, zumindest für eine Leiter, viel zu unsicher ist und bedeutende Gefahren in sich birgt. Diese bekannte Ausführung weist mithin zwei Sicherungselemente auf, welche zusammen arbeiten müssen, ansonst diese Sicherung, wie erwähnt, für Leitern nicht gewährleistet ist. Der Gummistreifen übt auf die Sprosse eine axiale Kraftkomponente aus, welche den Haltestab an den Holm presst und mithin bei angestellter Leiter verhüten soll, dass dieser Haltestab aus der Sprossenöffnung herausfällt.

Da bei Alterung des Gummistreifens dieser die erwähnte axiale Schubkraft verliert, wird diese Ausführung für prüfpflichtige Leitern nicht zugelassen.

Aber auch eine weitere Ausführung in dieser Vorveröffentlichung bedarf zweier Elemente, um die Sicherung sicherzustellen, nämlich Rippen als seitliche Halterung und federnde Rippen zur eigentlichen Sicherung.

Eine weitere Ausführung zeigt eine Leiter, die ohne Zerstörung gewisser Teile nicht zerlegbar ist.

Die zerlegbare Leiter gemäss der vorliegenden Erfindung weist ein einziges Sicherungselement auf, welches eine lösbare Verbindung zwischen Holm und Sprossen gewährleistet. Die Konstruktion stützt sich auf eine selbsthemmende Keilverbindung, was, als glückliche Formkombination von Sprosse und Sicherung, weder im DE-U-78 02 596, noch in den DE-A-23 27 527 und DE-C-944 457, nicht einmal andeutungsweise, gezeigt wird.

Die DE-B- 1 022 848 offenbart eine Leiter, welche nicht zerlegbar ist. Diese Konstruktion verlangt ein genaues Bohren der Öffnungen 7 mittels Bohrlehre. Auch müssen die verwendeten Hauptprofile, d.h. die Längsträger, auf «einige Zehntel mm» stimmen, wenn nicht Schwierigkeiten beim Montieren auftreten sollen.

Es handelt sich also um Passarbeiten, die insbesondere in der heutigen Zeit sehr wesentlich verteuernd sind. Im weiteren ist diese Anordnung besonders gefährlich, wenn eine lange Leiter, wegen Anpassungsarbeiten beispielsweise, in mehrere Stücke zerlegt, d.h. auseinandergesägt wird. Die Stange hat keinerlei Halt mehr.

In der FR-A-55 23 05 wird eine Verbindung von Rundrohren gezeigt, wobei das in die Längsträger einzusteckende Sprossenrohr genau senkrecht zur Rohrmittellinie angeordnete Einkerbungen aufweist, während das eingeschobene Rohr eine entsprechende Querschnittsveränderung mit in diese Ausnehmungen vorstehende Lappen hat. Diese Lappen sind weder besonders vorgespannt noch besonders ausgebogen. Sie müssen in die Aussparungen zu liegen kommen, sofern die Sprosse und das Innenrohr die richtige Drehlage zueinander haben. Bei dieser Ausführung muss ein genaues Einpassen der beiden Rohre aufeinander erfolgen, da die Einschiebelage durch keine Anschlagorgane sofort narrensicher einstellbar ist. Auch ist durch keine entsprechende Formgebung ein Sichern der Sprosse in den Längsträgern, z.B. durch vorgespannte, elastisch deformierbare Lappen o. dgl. möglich.

Zum Stande der Technik gehört ferner die DE-A- 22 41 533, in welcher eine Steckverbindung von Profilsprossen in Profilholmen einer Leiter beschrieben wird. Hier sind die Profilsprossen fest und unlösbar in den Profilholmen gehalten. Diese Leiter ist unzerlegbar. Die nicht lösbare Verbindung ergibt sich durch federnde Lappen, die an ihren Enden mit Nasen versehen sind, welche Nasen beim Einschieben des jeweiligen Profilholmes in dessen entsprechende Nuten oder Kerben eingreifen. Diese wohl elastisch federnden Lappen ergeben eine nicht lösbare Schnappverbindung, im Gegensatz zu einer lösbaren Schiebeverbindung. Auch ist das Einschnappen der Sicherungslappen in keiner Weise sichergestellt und daher ist diese Verbindung nicht narrensicher, also gefährlich.

Die vorliegende Erfindung bezweckt die Schaffung einer zerlegbaren, optimal gesicherten Leiter, welche, an der Baustelle selbst, mühelos auch durch nicht handwerklich Geschulte, sicher zusammengesteckt und ebenso mühelos wieder zerlegt werden kann.

Eine derart zerlegbare Leiter zeichnet sich erfindungsgemäss dadurch aus, dass die Ausnehmung am Sprossenende als zur Schieberichtung des Sicherungsorganes schrägverlaufender Schlitz ausgebildet ist. Ein Ausführungsbeispiel des Erfindungsgegenstandes wird anschliessend anhand einer Zeichnung erläutert.

Es zeigen:

Fig. 1 einen Ausschnitt aus einer zerlegbaren Leiter, in perspektivischer, auseinandergenommener Ansicht,

Fig. 2 einen Schnitt durch eine Sicherungsschiene gemäss Schnittlinie II – II der Fig. 1,

Fig. 3 ein anderes Profil eines Holmes einer zerlegbaren Leiter, analog demjenigen gemäss den Figuren 1 und 2.

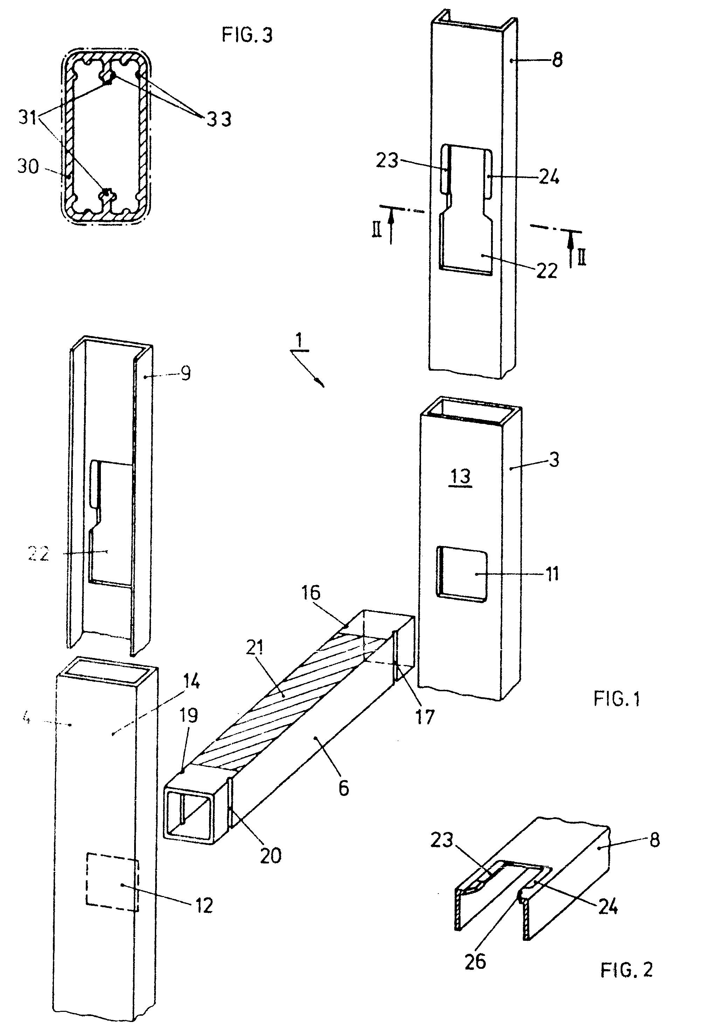

Eine zerlegbare Leiter, wie diese insbesondere als Schachtleiter Verwendung finden kann, besteht vorzugsweise aus einer Aluminiumlegierung. Es können indessen auch andere Metalle oder Kunststoffe, gegebenenfalls mit entsprechenden Oberflächenbeschaffenheiten, Verwendung finden. Die Leiter 1 weist zwei seitliche Holme 3 und 4 auf, zwischen denen Sprossen 6 eingefügt sind. Zur Sicherung der Sprossen 6 dienen Sicherungsschienen 8 und 9, welche seitlich in die Holme 3 und 4 eingeschoben werden. Die Holme 3 und 4 sind mit entsprechenden Öffnungen 11 und 12 in zwei Profilwänden 13 und 14 versehen. Sie dienen der Aufnahme der Sprossen 6, welche an ihren beiden Enden mit je zwei sich gegenüberliegenden Schlitzen 16 und 17, bzw. 19 und 20 versehen sind. Diese Schlitze sind zur Erreichung einer Keilwirkung, leicht geneigt. Die Sprossen 6 sind zwecks besseren Standes des Benützers mit Rillen 21 versehen. Die beiden Sicherungsschienen 8 und 9 sind mit einer der Zahl der Öffnungen 11 und 12 entsprechenden Zahl von Sicherheitsschienenöffnungen 22 versehen, deren eine Teil genau dem Querschnitt der Öffnungen 11 und 12 entspricht, während der darüberliegende Teil (Fig. 1) mit zwei seitlichen, federnd ausgebildeten Sicherungslappen 23 und 24 versehen ist. Die beiden Sicherungslappen 23 und 24 sind an ihren freien Enden zwecks leichteren Einführens in die Schlitze 16, 17, bzw. 19, 20 der Sprossen 6 konisch abgeschrägt und auf ihrer Länge ebenfalls mit leichtem Anzug 26 versehen, um eine selbsthemmende Keilverbindung mit den Sprossen 6 sicherzustellen.

Der in Fig. 1 einen einfachen Rechteck-Querschnitt aufweisende Holm kann auch mit einem Querschnitt gemäss Fig. 3 vorgesehen werden. Hier weist das Holmprofil 30 zwei ins Innere vorstehende Schienen 31 auf sowie eine Anzahl Rippen 33, die sich längs des Profils erstrecken.

Der Zusammenbau der zerlegbaren Leiter erfolgt in der Weise, dass die Holme 3 und 4 bereitgelegt und die Sicherungsschienen 8 und 9 eingeschoben werden, so weit, bis sich die Öffnungen 11 und 12 der Holme 3 und 4 mit den Sicherungsschienenöffnungen 22 decken, d.h. mit den Teilen der Sicherungsschienenöffnungen 22, welche den Öffnungen in den Profilwänden 13 und 14 entsprechen. Hierauf werden die Sprossen 6 in den Holm 3 eingeführt, bis deren Enden innen an der äusseren Profilwand anstehen. Die Sprossenprofile sind so gewählt (nicht quadratisch), dass deren Einführen in die Öffnungen 11 und 12 nur erfolgen kann, wenn die Schlitze 16, 17, 19, 20 etwa parallel zur Längsachse der Holme 3, 4 verlaufen. Wenn nun alle Sprossen 6 in den Holm 3 eingeführt sind, wird die entsprechende Sicherungsschiene 8, z.B. mittels eines Gummihammers oder Eisenhammers unter Auflage eines Holzes in das Innere des Holmes 3 getrieben. Dabei gelangen die Sicherungslappen 23 und 24 in die Schlitze 16 und 17, womit die Sprossen 6 praktisch unbeweglich im Holm 3 befestigt sind.

Nun wird der andere Holm 4 auf die freien Enden der Sprosse 6 aufgeschoben und entsprechend die Sicherungsschiene 9 in den Holm 4 eingetrieben, worauf die zerlegbare Leiter gebrauchsfertig ist.

Das in Fig. 3 dargestellte Holmprofil weist den Vorteil auf, dass die Sicherungsschiene nur auf den Rippen 33 aufliegt, was ein Einführen erleichtert und trotzdem eine feste Verbindung ergibt. Die Holmschienen 31, im Profil 30, erlauben Sicherungsschienen 8, 9 zu verwenden, welche ebenfalls U-förmig sind, jedoch Schenkel geringerer Höhe aufweisen. Dies ist material- und mithin gewichtssparend. Die Biegefestigkeit dieser U-Profile geringerer Schenkelabmessungen ist festigkeitsmässig völlig genügend.

Die Sprossen 6 haben vorzugsweise nicht kreisrunden Querschnitt, sondern sind mehrkantig, vorzugsweise rechteckig-vierkantig, um eine grössere Auflagefläche für den Schuh zu sichern.

Die Erfahrung zeigt, dass im Schachtleiternbau und im allgemeinen Leiternbau Leitern mit flachen Sprossenauftritten sehr gefragt sind. Bei der erfindungsgemässen Leiter sind die Sprossen absichtlich in einer rechteckigen Anordnung gewählt, damit diese keinesfalls in einer verkehrten Richtung in die Bohrlöcher eingelegt werden können. Durch diese Massnahme sind die eingerillten Rutschsicherungen immer unter dem Fuss und die notwendigen Schlitze liegen in jedem Falle in der Laufrichtung des Sicherungsorgans. Wenn eine Leiter auf einer Baustelle auseinandergenommen und wieder zusammengesetzt wird, kommen die Schlitze in jedem Fall zwangsläufig so zu liegen, dass das Sicherungsorgan keinesfalls gehemmt oder beschädigt werden kann.

**Patentansprüche**

1. Zerlegbare Leiter mit mindestens einem hohlprofilförmigen Holm (3, 4) und herausnehmbaren Sprossen (6), wobei der Holm (3, 4) mit zu den Sprossenenden genau passenden Öffnungen (11, 12) in der den Sprossen (6) zugekehrten Profilwand (13, 14) versehen ist, und die Sprossenenden je mindestens eine Ausnehmung (16, 17; 19, 20) aufweisen, in die ein in Längsrichtung des Holms (3, 4) eingeschobenes Sicherungsorgan (8, 9) eingreift, dadurch gekennzeichnet, dass die Ausnehmung am Sprossenende als zur Schieberichtung des Sicherungsorgans (8, 9) schrägverlaufender Schlitz (16, 17; 19, 20) ausgebildet ist.

2. Leiter nach Anspruch 1, dadurch gekennzeichnet, dass das Sicherungsorgan als mindestens in einer Querrichtung dem Holm angepasste Profilschiene (8, 9) ausgebildet ist.

3. Leiter nach Anspruch 1 oder Anspruch 2, dadurch gekennzeichnet, dass die Sprossen (6) mehrkantige, vorzugsweise vierkantige Hohlprofilstäbe sind.

4. Leiter nach Anspruch 2, dadurch gekennzeichnet, dass das Sicherungsorgan (8, 9) ein U-Profil aufweist.

5. Leiter nach einem der Ansprüche 1–4, dadurch gekennzeichnet, dass das Sicherungsorgan (8) mit Sicherungsöffnungen (22) versehen ist, deren eine Teil dem Durchstecken der Sprossenenden dient, während ein anderer Teil der Öffnungen mit vorzugsweise federnd vorgespannten Sicherungslappen die Sprossen festhaltend in deren Schlitze eingreift.

6. Leiter nach einem der Ansprüche 1–5, dadurch gekennzeichnet, dass der Holm (3, 4) ein Kastenprofil mit in dessen Inneres vorstehenden Teilen, z.B. Schienen (31) und/oder Rippen (33), ist.

## Revendications

1. Echelle démontable qui comprend au moins un montant en forme de profilé creux (3, 4) et des échelons amovibles (6). Le montant (3, 4) étant pourvu, dans sa paroi (13, 14) tournée vers les échelons (6); d'ouvertures (11, 12) correspondant exactement aux extrémités des montants tandis que les extrémités des échelons présentent chacune au moins une découpe (16, 17; 19, 20) dans laquelle s'engage un organe de blocage (8, 9) inséré dans la direction longitudinale du montant (3, 4), caractérisée en ce que la découpe prévue à l'extrémité des échelons est réalisée sous la forme d'une fente (16, 17; 19, 20) inclinée par rapport à la direction d'insertion de l'organe de blocage (8, 9).

2. Echelle selon la revendication 1, caractérisée en ce que l'organe de blocage est constituée par une barre profilée (8, 9) adaptée à la forme du montant, au moins dans la direction transversale de celui-ci.

3. Echelle selon la revendication 1 ou 2, caractérisée en ce que les échelons (6) sont constitués par des barreaux profilés creux, de section polygonale et de préférence quadrangulaire.

4. Echelle selon la revendication 2, caractérisée en ce que l'organe de blocage (8, 9) présente un profil en U.

5. Echelle selon l'une des revendications 1–4, caractérisée en ce que l'organe de blocage (8) est pourvu d'ouvertures d'arrêt (22) dont une partie sert au passage tranversal des extrémités des échelons, tandis qu'une autre partie des ouvertures s'engage, au moyen de pattes de blocage, de préférence, précontraintes élastiquement, dans les fentes des échelons en les immobilisant.

6. Echelle selon l'une des revendications 1–5, caractérisée en ce que le montant (3, 4) est un profilé en caisson à l'intérieur duquel font saillie des éléments, par exemple des rails (31) et/ou des nervures (33).

## Claims

1. Separable ladder having at least one stringer (3, 4) in the form of a hollow section, and removable rungs (6), in which the stringer (3, 4) is provided in its wall (13, 14) facing toward the rungs (6), with openings (11, 12) exactly fitting the rung ends, and the rung ends in each case, having at least one recess (16, 17; 19, 20) into which a safety member (8, 9) inserted in the longitudinal direction of the stringer (3, 4) engages, characterised in that the recess at the rung end is constructed as a slot (16, 17; 19, 20) which is inclined to the direction of insertion of the safety member (8, 9).

2. Ladder according to Claim 1, characterised in that the safety member is constructed as a sectional bar (8, 9) adapted to the stringer at least in one transverse direction.

3. Ladder according to Claim 1 or Claim 2, characterised in that the rungs (6) are many-sided, preferably four-sided hollow section bars.

4. Ladder according to Claim 2, characterised in that the safety member (8, 9) has a U-section.

5. Ladder according to any one of Claims 1 to 4, characterised in that the safety member (8) is provided with safety openings (22), one part of which permits the insertion of the rung ends whilst another part of the openings firmly engages the rungs in its slits with safety lugs preferably under initial spring tension.

6. Ladder according to any one of Claims 1 to 5, characterised in that the stringer (3, 4) is a box section with parts projecting into its interior e.g. bars (31) and/or ribs (33).

FIG. 3

31

33

30

FIG. 1

8

23

24

II

II

22

1

9

3

13

11

22

16

21

14

19

17

4

6

20

12

23

8

24

26

FIG. 2